# EUROPÄISCHE PATENTSCHRIFT

(11) **EP 3 395 697 B1**
(45) Veröffentlichungstag und Bekanntmachung des Hinweises auf die Patenterteilung: **31.07.2019**
(21) Anmeldenummer: 18168279.0
(22) Anmeldetag: 19.04.2018
(51) Int. Cl.: B65B 39/00, G01G 13/16

(54) **GITTERKLAPPE**
GRID FLAP
RABAT DE GRILLE

(30) Priorität: 27.04.2017 DE 202017002222 U
(43) Veröffentlichungstag der Anmeldung: 31.10.2018
(73) Patentinhaber: Multipond Wägetechnik GmbH, 84478 Waldkraiburg (DE)
(72) Erfinder: PETERS, Andreas, 84544 Aschau am Inn (DE); PROFE, Felix, 84543 Winhöring (DE)
(74) Vertreter: Prüfer & Partner mbB Patentanwälte · Rechtsanwälte

(56) Entgegenhaltungen:
- DE-A1- 3 447 323
- DE-A1-102005 014 441
- DE-A1-102010 016 505
- GB-A- 1 477 724
- US-A- 2 759 411
- US-A1- 2005 092 372

## Beschreibung

Die vorliegende Erfindung bezieht sich auf die Verwendung einer Gitterklappe in der Lebensmittelindustrie oder lebensmittelverarbeitenden Industrie.

Gitterklappen werden in der Lebensmittelindustrie bzw. lebensmittelverarbeitenden Industrie vorzugsweise dann eingesetzt, wenn ein stark klebriges Produkt übergeben werden soll. Durch ein Gitter soll die Anhaftung minimiert werden, so dass ein Produkt schneller übergeben werden kann.

Gitterklappen nach dem Stand der Technik weisen einen Rahmen, eine Lagerung, eine Verbindungsstruktur zwischen der Klappe und der Lagerung sowie ein Gitter auf. Die Lagerung kann als formschlüssige, kraftschlüssige, drehbare oder starre Verbindung ausgeführt sein.

Im Stand der Technik ist insbesondere eine Gitterklappe bekannt, bei welcher das Drahtgewebe mit einem Metallrahmen an den Übergängen verschweißt ist, wodurch eine Metall-/MetallVerbindung gebildet wird (siehe EP 2 848 903 A1).

Ferner sind Gitterklappen mit Kunststoffrahmen und Metallgitter bekannt, bei denen ein Metallgitter mit einem Kunststoffrahmen verschraubt oder durch Erhitzung verschmolzen werden.

Bei Gitterklappen im Stand der Technik ist der Bereich des Gitters ferner immer dann flach, wenn das Drahtgewebe automatisiert umlaufend an den Rahmen verschweißt ist. Dies ist der Fall, da jeder einzelne Draht bzw. jede einzelne Strebe einzeln im Rahmen verschweißt werden muss. Da dieser Schweißvorgang durch eine Maschine erfolgt, muss ein Programm jede Anschweißposition anfahren können, weswegen es nötig ist, das Gitter flach zu gestalten.

Bei einem Rahmen, welcher jedoch nicht flach ist, sind Anschweißpositionen aufgrund der komplexen Geometrie bzw. der Fertigungstoleranzen nur mit sehr hohem Aufwand genau anzufahren. Die Anbindung bzw. die Verbindung von Gitter und Rahmen kann außerdem zu Festigkeitsproblemen führen. Aufgrund dieser Probleme können übliche Gitterklappen nur eine begrenzte Lebensdauer im Übergang von Gitter zu Rahmen bieten, vor allem bei einer Stoß- bzw. Schockbelastung durch ein auftreffendes Produkt. Dies ist durch die bisherigen Fertigungsmethoden bedingt.

Die begrenzte Lebensdauer entsteht aufgrund folgender Einflüsse:
Zum einen können Schweißeigenspannungen entstehen, welche bei der Verbindung von Rahmen und Gitter entstehen. Diese wirken sich festigkeitsmindernd aus.

Ferner können aufgrund großer Querschnittsänderungen bei der Verbindung von Gitterdrähten mit dem Rahmen Steifigkeitsschwankungen auftreten, da eine große Querschnittsänderung erfolgt und die Querschnitte nicht stetig sind.

Ferner kann zwischen Draht, Schweißpunkt und Metallrahmen die Kerbwirkung die Festigkeit an der Gitterklappe weiter verringern.

Da ein Drahtquerschnitt bei Punktschweißen lokal verkleinert wird, entstehen somit hohe Spannungen, was ebenfalls die Dauerfestigkeit verringert.

Ferner ist durch die Kraftumleitung zwischen Draht und Metallrahmen ein ungünstiger Kraftfluss vorhanden, da bei vielen Gitterklappen gemäß dem Stand der Technik ein Gitter auf der Innenseite eines Metallrahmens über einen Schrägstoß verschweißt ist.

Solche Gitterklappen gemäß dem Stand der Technik benutzen in der Regel ein Drahtgeflecht aus mehreren einzelnen Drähten; bei solchen Drahtgeflechten lassen sich Drähte untereinander verschieben, wenn auch nur gering. Ein Drahtgewebe hat daher im Vergleich zu einem starren Gebilde eine geringere Steifigkeit.

Um eine zu starke Durchbiegung des Gitters zu verhindern, sind im Stand der Technik auch Rahmen im Bereich des Gitters auf der produktabgewandten Seite bekannt, sozusagen als Unterkonstruktion für das Gitter.

Durch die begrenzte Steifigkeit und die Tatsache, dass die Streben verschiebbar sind und nicht fest miteinander verbunden sind, ist es nicht möglich, das Drahtgeflecht einer Gitterklappe in einer Struktur auszuführen, die flach ist und ohne Unterkonstruktion auskommt. Somit sind beispielsweise gebogene oder gekrümmte Flächen oder Freiformflächen schwer realisierbar. Bei komplexen Geometrien muss ein Gitter daher unbedingt zusätzlich mit einer Unterkonstruktion versehen werden und mit dieser verschweißt werden, und durch diese benötigte Unterkonstruktion auf der Rückseite des Gitters entstehen doppelte Flächen, Hinterschneidungen und Hohlräume. Dies wirkt einer hygienegerechten Gestaltung entgegen, da eine einfache und sichere Reinigung so nicht möglich ist und gerade in Hohlräumen die Akkumulation von Schmutz, Bakterien oder Reinigungsmittelrückständen wahrscheinlich ist.

Es ist daher Aufgabe der vorliegenden Erfindung, eine Gitterklappe mit minimierter Anhaftung zum Übergeben eines stark klebrigen Produkts in der Lebensmittelindustrie zur Verfügung zu stellen, welche ein selbsttragendes Gitter ohne Unterkonstruktion aufweist und somit den Hygieneanforderungen in der Lebensmittelindustrie bzw. lebensmittelverarbeitenden Industrie gerecht wird. Weiterhin ist es ein Ziel der vorliegenden Erfindung, eine Verbindung von Gitter und Rahmen zu ermöglichen, welche eine lange Lebensdauer insbesondere bei dynamischer Stoßbelastung ermöglicht. Ferner ist es ein Ziel der vorliegenden Erfindung, ein in verschiedenen Geometrien formstabiles Gitter zur Verfügung zu stellen.

Diese Aufgabe wird durch die Verwendung einer Gitterklappe gemäß Anspruch 1 gelöst.

Die Erfindung beinhaltet die Verwendung eine Gitterklappe, welche eine Vielzahl vertikaler und horizontaler Gitterstreben aufweist, welche innerhalb eines Rahmens angeordnet sind. Hierbei überlappen sich jeweils eine vertikale und eine horizontale Gitterstrebe an einem Kreuzungspunkt, wobei ein Kreuzungspunkt der Gitterstreben einstückig ausgebildet ist. Am Kreuzungspunkt sind vertikale und horizontale Gitterstreben somit nicht verschiebbar. Weitere vorteilhafte Ausgestaltungen sind Gegenstand der abhängigen Ansprüche.

Eine Gitterklappe für die Verwendung gemäß der vorliegenden Erfindung kann unter Verwendung modernster Fertigungsverfahren gefertigt werden (urformende und generative Verfahren wie Guss, Spritzguss, 3D-Druck, Sintern; Erosionsverfahren wie Elektroerosion, Funkenerosion, Laserschneiden, Ausstanzen einzelner Hohlräume). Solche Fertigungsverfahren sind für verschiedene Metalle und Kunststoffe geeignet.

Somit wird es möglich, eine Gitterklappe bestehend aus Rahmen und Gitterstruktur aus einem Stück zu fertigen, wobei ein so erzeugtes Gitter ohne ein Vorsehen einer Unterkonstruktion selbsttragend ist und in jegliche Klappengeometrie geformt werden kann, beispielsweise in einer zylindrische Klappenform, Freiflächenform, aber auch in Form einer ebenen Fläche. Es ist nicht nötig, eine nachträgliche Verbindung zwischen Gitter und Rahmen herzustellen, da beide Teile der Klappe aus einem Stück bestehen. Nach der Fertigung kann die Gitterklappe spannungsarm geglüht werden, so dass keine Eigenspannungen mehr in den Gitterstreben vorhanden sind. Da das Gitter durch seine Topologie (einstückig) selbsttragend ist und das Übereinanderliegen zweier Gitterstreben vermieden wird, kann auf doppelte Flächen bzw. Hohlräume verzichtet werden, was zu einer hygienegerechten Gestaltung der Gitterklappe beiträgt.

Im Folgenden werden bevorzugte Ausführungsbeispiele unter Bezugnahme auf die beigefügten Zeichnungen näher erläutert.
- Fig. 1: ist eine Querschnittansicht eines Drahtgitters gemäß dem Stand der Technik.
- Fig. 2: ist eine Querschnittansicht eines Kreuzungspunkts einer Gitterstruktur einer Gitterklappe für die Verwendung gemäß der vorliegenden Erfindung.
- Fig. 3: zeigt die Rückseite einer Gitterstruktur, welche Kreuzungspunkte nach Fig. 2. enthält.
- Fig. 4: zeigt eine horizontale bzw. vertikale Gitterstruktur.
- Fig. 5: zeigt eine um 45° verdreht orientierte Gitterstruktur.
- Fig. 6: zeigt eine Gitterklappe für die erfindungsgemäße Verwendung, wobei die Gitterstruktur einer zylindrischen Fläche angenähert ist.
- Fig. 7: zeigt eine Gitterklappe wie in Fig. 6, allerdings mit Verbindungsstruktur und Lagerung.
- Fig. 8: zeigt eine Gitterklappe für die erfindungsgemäße Verwendung, die einer gekanteten Klappenfläche angenähert ist.
- Fig. 9: zeigt eine Gitterklappe wie in Fig. 8, allerdings mit Verbindungsstruktur und Lagerung.

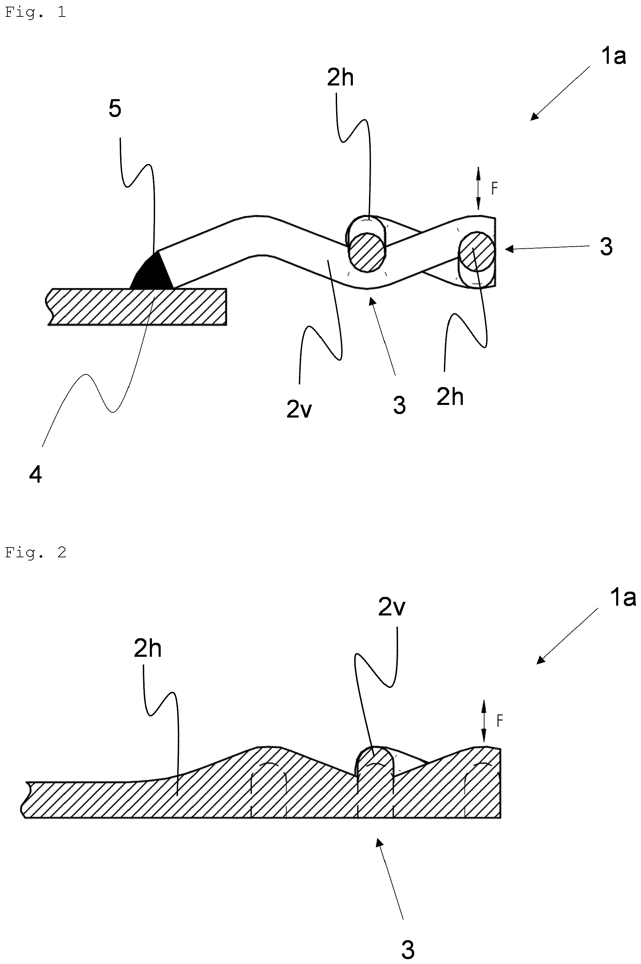

In Fig. 1 ist eine Querschnittansicht eines Gitters la einer Gitterklappe gemäß dem Stand der Technik zu sehen. Das Gitter la besteht aus Drähten 2h und 2v, welche ineinander verwoben sind und dadurch zusammenhalten. An den Kreuzungspunkten 3 der Gitterstreben 2h und 2v sind diese Gitterstreben 2h und 2v nicht fest miteinander verbunden. Die Gitterstreben 2h und 2v sind geringfügig gegeneinander verschiebbar, was zu einer begrenzten Steifigkeit führt. Aus diesem Grund ist eine Unterkonstruktion (hier nicht gezeigt) nötig. An den Kreuzungspunkten 3 liegen die Gitterstreben 2h und 2v übereinander, und genau wegen diesem Aufeinanderliegen ist eine große Anzahl doppelter Flächen vorhanden.

Im vorliegenden Beispiel ist die Schweißverbindung zwischen Gitterstrebe 2v und Rahmen 4 als Schweißnaht 5 ausgeführt. Diese Schweißnaht 5 ist hier als Schrägstoß ausgeführt. Wenn die Gitterklappe bzw. das Gitter la durch die Kraft F wechselnd belastet wird, liegt eine Spannungsspitze auf der Innenseite des Schrägstoßes, d.h. der Schweißnaht 5, vor. Die Kerbwirkung auf der Innenseite führt an dieser Stelle zu Spannungsspitzen.

Fig. 2 zeigt die Schnittansicht einer Gitterstruktur la für die Verwendung gemäß der vorliegenden Erfindung. Die Oberseite bzw. die produktführende Seite des Gitters la ähnelt dem Gitter aus Fig. 1. Jedoch ist im Gegensatz zu Fig. 1 der Unterschied vorhanden, dass an den Kreuzungspunkten 3 die drahtähnlichen Strukturen 2h und 2v aus einem Stück gestaltet sind. Solch eine Anordnung führt zu einer höheren Steifigkeit im Vergleich zu üblichen Drahtgittern, wie es beispielsweise in Fig. 1 dargestellt ist. Ferner können an den Kreuzungspunkten 3 somit doppelte Flächen vermieden werden. Vielmehr ist die Rückseite der Gitterstruktur 1a eine einzige Fläche, und diese zusammenhängende Fläche lässt sich mechanisch sehr gut reinigen. Die Verbindung vom Gitter la zum Rahmen 4 ist als stetiger Übergang ausgeführt, das Gitter la sowie der Rahmen sind bündig, ähnlich einem Stumpfstoß.

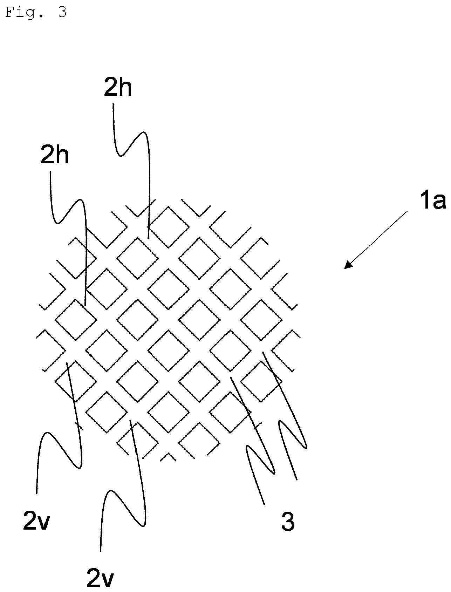

Fig. 3 zeigt die Rückansicht einer Gitterklappe mit Kreuzungspunkten 3 gemäß Fig. 2. Hier wird nochmals deutlich, dass die gesamte Gitterstruktur la einstückig ausgebildet ist.

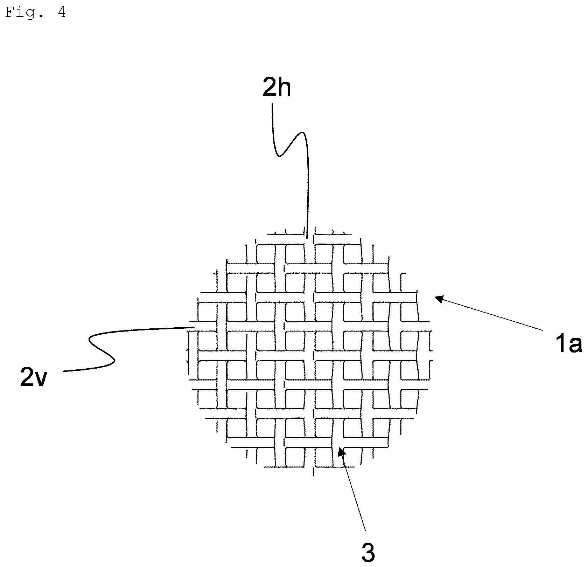

Fig. 4 zeigt eine bestimmte Orientierung der Gitterstruktur la. In diesem Fall ähnelt die Gitterstruktur la einem Flechtwerk oder Gewebe. Die Streben 2h und 2v sind im Wesentlichen rechtwinklig angeordnet.

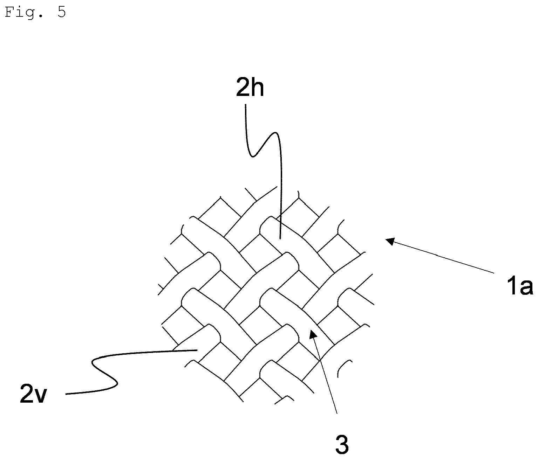

Fig. 5 zeigt eine andere, ebenfalls im Wesentlichen rechtwinklige Anordnung der Streben 2h und 2v der Gitterstruktur la. Auch hier wird ersichtlich, dass die Kreuzungspunkte 3 einstückig ausgeführt sind und hier keine doppelten Flächen vorliegen.

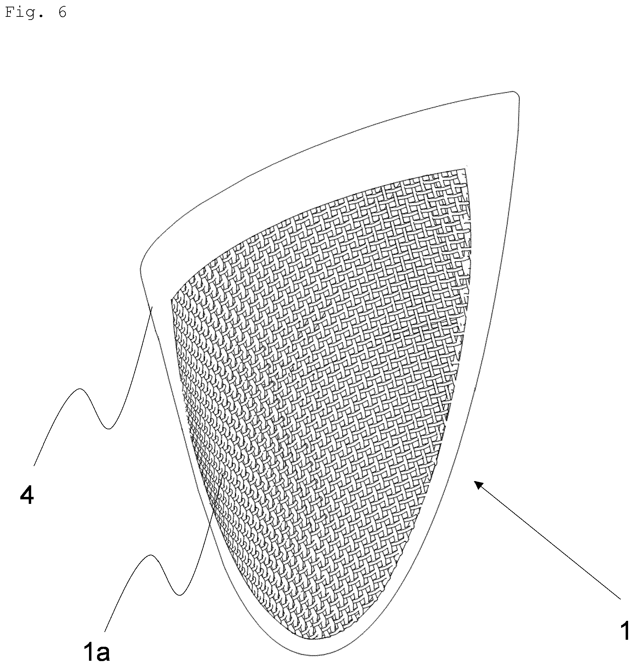

Fig. 6 zeigt eine besonders vorteilhafte Ausführungsform einer Gitterklappe 1, wobei die Gitterklappe 1 einer zylindrischen Fläche angenähert ist. Der Krümmungsradius der Klappenfläche vom oberen Teil zum unteren Teil ist variabel, kann aber auch annähernd konstant bleiben.

Auch hier wird ersichtlich, dass die Gitterstruktur la nahtlos in den Rahmen 4 übergeht.

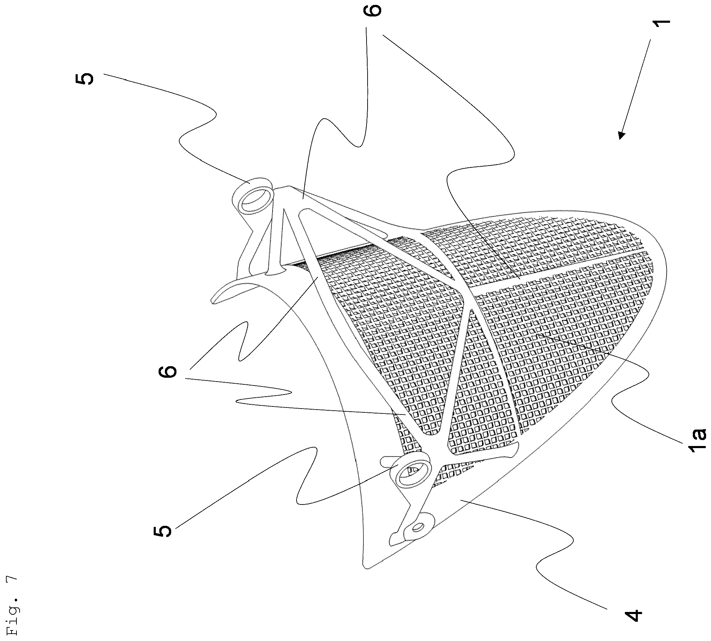

Fig. 7 zeigt eine Leichtbauverbindungsstruktur der Gitterklappe 1 aus Fig. 6, bei welcher die Kraftübertragung zur den Lagerstellen 5 direkt erfolgt. Ferner wird ersichtlich, dass keine Unterkonstruktion für das Gitter la nötig wird, sondern lediglich einzelne Verstärkungsstreben 6, welche jedoch auch problemlos in der zylinderförmigen Form der Gitterklappe 1 biegbar sind.

Auch hier wird ersichtlich, dass die Gitterstruktur la nahtlos in den Rahmen 4 übergeht.

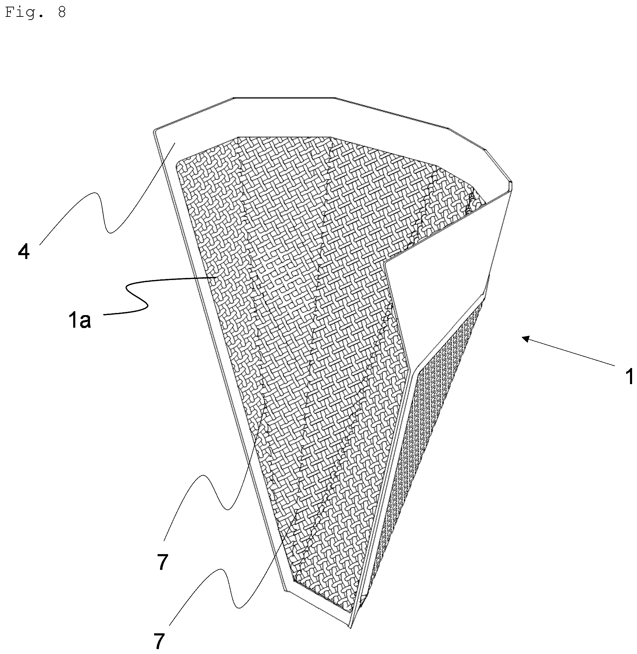

In Fig. 8 ist eine weitere, besonders vorteilhafte Ausführungsform der Gitterklappe 1 dargestellt, wobei hier die Gitterklappe 1 an die Form einer gekanteten Blechklappe angenähert ist. Die Gitterstruktur la weist mehrere Kanten 7 auf, wobei weiterhin Gitter la und Rahmen 4 einstückig ausgebildet sind.

Die Umfangsoberfläche der Gitterklappe 1 beschreibt hier die Form einer Pyramide mit n-Eck als Grundfläche.

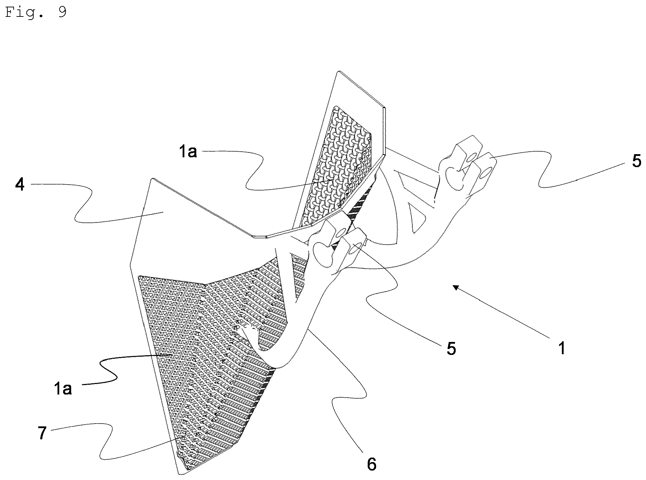

Fig. 9 zeigt die Verbindungsstruktur der Gitterklappe aus Fig. 8, mit der eine Kraftübertragung von den Lagerstellen 5 über Verstärkungsstreben 6 direkt auf die Gitterklappe 1 ermöglicht wird. Der Übergang vom Gitter la zur Verbindungsstruktur 6 ist hierbei hygienisch und aus einem Stück, ohne Hohlräume oder doppelte Flächen ausgeführt. Trotz allem ist das Gitter selbsttragend und kann Kräfte auf die Klappe verteilen, ohne dass hier eine Durchbiegung riskiert werden müsste. Die Gitterstruktur la weist auch hier mehrere Kanten 7 auf, wobei weiterhin Gitter la und Rahmen 4 einstückig ausgebildet sind.

Die vorliegende Erfindung ist nicht auf die Verwendung der oben genannten Ausführungsformen beschränkt.

Die Orientierung der Gitterstruktur kann je nach Produkt unterschiedlich sein und kann im Rahmen der vorliegenden Erfindung auch unterschiedlich ausgeführt sein. Hierbei spielen vor allem die individuelle Reinigbarkeit, die Produktgröße, die Produktform sowie die benötigten Abräumeigenschaften eine Rolle. Die Gitterstreben 2v und 2h müssen an den Kreuzungspunkten nicht rechtwinklig miteinander verbunden sein, es kann vielmehr auch eine Wabenform bzw. eine Webform oder Flechtform vorliegen. Auch ist eine Form, wie sie bei Gewirken üblich ist, möglich. Auch sind andere Strukturen, beispielsweise Maschen, die durch Stricken, Häkeln, usw. herstellbar sind, möglich.

Auch ist die Form der Gitterklappe nicht auf die oben genannten Ausführungsformen beschränkt. Denkbar sind weiterhin Kegelformen, weiterhin kugelsegmentartige Formen, prismaförmige Formen sowie rechteckige Formen.

## Patentansprüche

1. Verwendung einer Gitterklappe (1) mit minimierter Anhaftung zum Übergeben eines stark klebrigen Produkts in der Lebensmittelindustrie, wobei die Gitterklappe aufweist:
eine Vielzahl vertikaler (2v) sowie horizontaler (2h) Gitterstreben,
einen Rahmen (4), der die Gitterstreben (2h, 2v) umgibt, wobei sich jeweils eine vertikale (2v) sowie eine horizontale (2h) Gitterstrebe in einem Kreuzungspunkt (3) überlappen,
**dadurch gekennzeichnet, dass**
die Kreuzungspunkte (3) der Gitterstreben (2h, 2v) einstückig ausgebildet sind.

2. Verwendung einer Gitterklappe (1) mit minimierter Anhaftung zum Übergeben eines stark klebrigen Produkts in der Lebensmittelindustrie gemäß Anspruch 1, wobei die Vielzahl vertikaler (2v) sowie horizontaler (2h) Gitterstreben, die Kreuzungspunkte (3) sowie der Rahmen (4) der Gitterklappe (1) einstückig ausgebildet sind.

3. Verwendung einer Gitterklappe (1) mit minimierter Anhaftung zum Übergeben eines stark klebrigen Produkts in der Lebensmittelindustrie gemäß einem der vorherigen Ansprüche, wobei die Verbindung der Gitterstreben (2h, 2v) zum Rahmen (3) als stetiger Übergang ausgeführt ist.

4. Verwendung einer Gitterklappe (1) mit minimierter Anhaftung zum Übergeben eines stark klebrigen Produkts in der Lebensmittelindustrie gemäß Anspruch 3, wobei die Verbindung der Gitterstreben (2h ,2v) zum Rahmen (4) bündig ausgeführt ist.

5. Verwendung einer Gitterklappe (1) mit minimierter Anhaftung zum Übergeben eines stark klebrigen Produkts in der Lebensmittelindustrie gemäß einem der vorherigen Ansprüche, wobei die vertikalen (2v) sowie horizontalen (2h) Gitterstreben an den Kreuzungspunkten (3) im Wesentlichen rechtwinklig angeordnet sind.

6. Verwendung einer Gitterklappe (1) mit minimierter Anhaftung zum Übergeben eines stark klebrigen Produkts in der Lebensmittelindustrie gemäß einem der Ansprüche 1 bis 4,
wobei die vertikalen (2v) sowie horizontalen (2h) Gitterstreben eine im Wesentlichen maschenartige Struktur aufweisen.

7. Verwendung einer Gitterklappe (1) mit minimierter Anhaftung zum Übergeben eines stark klebrigen Produkts in der Lebensmittelindustrie gemäß einem der vorherigen Ansprüche, wobei die Gitterklappe (1) eine im Wesentlichen zylindrische Fläche beschreibt.

8. Verwendung einer Gitterklappe (1) mit minimierter Anhaftung zum Übergeben eines stark klebrigen Produkts in der Lebensmittelindustrie gemäß Anspruch 7, wobei der Krümmungsradius der Gitterklappe (1) über die Länge der Gitterklappe (1) variabel ist.

9. Verwendung einer Gitterklappe (1) mit minimierter Anhaftung zum Übergeben eines stark klebrigen Produkts in der Lebensmittelindustrie gemäß einem der Ansprüche 1-6, wobei die Gitterklappe (1) eine n-eckige Form aufweist.

10. Verwendung einer Gitterklappe (1) mit minimierter Anhaftung zum Übergeben eines stark klebrigen Produkts in der Lebensmittelindustrie gemäß einem der vorherigen Ansprüche, wobei die Gitterklappe (1) aus mehreren Segmenten zusammengesetzt ist.

11. Verwendung einer Gitterklappe (1) mit minimierter Anhaftung zum Übergeben eines stark klebrigen Produkts in der Lebensmittelindustrie gemäß einem der vorherigen Ansprüche, wobei im Rahmen (4) mindestens eine Verstärkungsstrebe (6) integriert ist, durch welche zumindest teilweise die Krafteinleitung von den Lagerstellen (5) erfolgt.

## Claims

1. Use of a grid flap (1) with a minimized adhesion for transferring of a very sticky product in food industry, the grid flap comprising:
a multiplicity of vertical (2v) and horizontal (2h) grid struts,
a frame (4), which surrounds the grid struts (2h, 2v),
wherein a vertical (2v) and a horizontal (2h) grid strut respectively overlap in a crossing point (3),
**characterized in that** the crossing points (3) of the grid struts (2h, 2v) are made of one piece.

2. Use of a grid flap (1) with a minimized adhesion for transferring of a very sticky product in food industry according to claim 1,
wherein the multiplicity of vertical (2v) and horizontal (2h) grid struts, the crossing points (3) and the frame (4) of the grid flap (1) are made of one piece.

3. Use of a grid flap (1) with a minimized adhesion for transferring of a very sticky product in food industry according to one of the previous claims,
wherein the connection of the grid struts (2h, 2v) to the frame (4) is formed as a steady transition.

4. Use of a grid flap (1) with a minimized adhesion for transferring of a very sticky product in food industry according to claim 3,
wherein the connection of the grid struts (2h, 2v) to the frame (4) is formed in a flush manner.

5. Use of a grid flap (1) with a minimized adhesion for transferring of a very sticky product in food industry according to one of the previous claims,
wherein the vertical (2v) and horizontal (2h) grid struts at the crossing points (3) are designed in a substantially perpendicular manner.

6. Use of a grid flap (1) with a minimized adhesion for transferring of a very sticky product in food industry according to one of claims 1 to 4,
wherein the vertical (2v) and horizontal (2h) grid struts comprise a substantially mesh-like structure.

7. Use of a grid flap (1) with a minimized adhesion for transferring of a very sticky product in food industry according to one of the previous claims,
wherein the grid flap (1) describes a substantially cylindrical area.

8. Use of a grid flap (1) with a minimized adhesion for transferring of a very sticky product in food industry according to claim 7, wherein the radius of curvature of the grid flap (1) is variable over the length of the grid flap (1).

9. Use of a grid flap (1) with a minimized adhesion for transferring of a very sticky product in food industry according to one of claims 1 to 6, wherein the grid flap (1) has an n-edged shape.

10. Use of a grid flap (1) with a minimized adhesion for transferring of a very sticky product in food industry according to one of the previous claims, wherein the grid flap (1) is composed of several segments.

11. Use of a grid flap (1) with a minimized adhesion for transferring of a very sticky product in food industry according to one of the previous claims, wherein at least one strengthening strut (6) is integrated in the frame (4), by which the application of forces from the bearings (5) occurs at least partially.

## Revendications

1. Utilisation d'un rabat de grille (1) avec adhérence minimisée pour le transfert d'un produit très collant dans l'industrie alimentaire, dans laquelle le rabat de grille présente :
une pluralité d'entretoises de grille verticales (2v) et horizontales (2h), un cadre (4), qui entoure les entretoises de grille (2h, 2v), dans laquelle respectivement des entretoises de grille verticale (2v) et horizontale (2h) se chevauchent en un point d'intersection (3),
**caractérisée en ce que**
les points d'intersection (3) des entretoises de grille (2h, 2v) sont réalisés d'un seul tenant.

2. Utilisation d'un rabat de grille (1) avec adhérence minimisée pour le transfert d'un produit très collant dans l'industrie alimentaire selon la revendication 1, dans laquelle la pluralité d'entretoises de grille verticales (2v) et horizontales (2h), les points d'intersection (3) ainsi que le cadre (4) du rabat de grille (1) sont réalisés d'un seul tenant.

3. Utilisation d'un rabat de grille (1) avec adhérence minimisée pour le transfert d'un produit très collant dans l'industrie alimentaire selon l'une quelconque des revendications précédentes, dans laquelle la liaison des entretoises de grille (2h, 2v) au cadre (3) est réalisée en tant que transition continue.

4. Utilisation d'un rabat de grille (1) avec adhérence minimisée pour le transfert d'un produit très collant dans l'industrie alimentaire selon la revendication 3, dans laquelle la liaison des entretoises de grille (2h, 2v) au cadre (4) est réalisée à fleur.

5. Utilisation d'un rabat de grille (1) avec adhérence minimisée pour le transfert d'un produit très collant dans l'industrie alimentaire selon l'une quelconque des revendications précédentes, dans laquelle les entretoises de grille verticales (2v) et horizontales (2h) sont agencées sensiblement en angle droit au niveau des points d'intersection (3).

6. Utilisation d'un rabat de grille (1) avec adhérence minimisée pour le transfert d'un produit très collant dans l'industrie alimentaire selon l'une quelconque des revendications 1 à 4,
dans laquelle les entretoises de grille verticales (2v) et horizontales (2h) présentent une structure sensiblement en forme de maille.

7. Utilisation d'un rabat de grille (1) avec adhérence minimisée pour le transfert d'un produit très collant dans l'industrie alimentaire selon l'une quelconque des revendications précédentes, dans laquelle le rabat de grille (1) décrit une surface sensiblement cylindrique.

8. Utilisation d'un rabat de grille (1) avec adhérence minimisée pour le transfert d'un produit très collant dans l'industrie alimentaire selon la revendication 7, dans laquelle le rayon de courbure du rabat de grille (1) est variable sur la longueur du rabat de grille (1).

9. Utilisation d'un rabat de grille (1) avec adhérence minimisée pour le transfert d'un produit très collant dans l'industrie alimentaire selon l'une quelconque des revendications 1-6, dans laquelle le rabat de grille (1) présente une forme à n côtés.

10. Utilisation d'un rabat de grille (1) avec adhérence minimisée pour le transfert d'un produit très collant dans l'industrie alimentaire selon l'une quelconque des revendications précédentes, dans laquelle le rabat de grille (1) se compose de plusieurs segments.

11. Utilisation d'un rabat de grille (1) avec adhérence minimisée pour le transfert d'un produit très collant dans l'industrie alimentaire selon l'une quelconque des revendications précédentes, dans laquelle au moins une entretoise de renforcement (6), par laquelle l'introduction de force des points d'appui (5) a lieu au moins en partie, est intégrée dans le cadre (4) .
